(19) **Europäisches Patentamt / European Patent Office / Office européen des brevets**

(11) **EP 2 780 420 B1**

(12) **EUROPEAN PATENT SPECIFICATION**

(45) Date of publication and mention of the grant of the patent:
**11.01.2017  Bulletin 2017/02**

(21) Application number: **12848785.7**

(22) Date of filing: **15.11.2012**

(51) Int Cl.:
**C08L 97/02** (2006.01)    **C08K 7/02** (2006.01)
**C08K 7/22** (2006.01)

(86) International application number:
**PCT/FI2012/051119**

(87) International publication number:
**WO 2013/072561 (23.05.2013 Gazette 2013/21)**

(54) **A COMPOSITE PRODUCT, A METHOD FOR MANUFACTURING A COMPOSITE PRODUCT AND ITS USE AND A FINAL PRODUCT**

VERBUNDPRODUKT, VERFAHREN ZUR HERSTELLUNG EINES VERBUNDPRODUKTS, VERWENDUNG DAVON UND ENDPRODUKT

PRODUIT COMPOSITE, PROCÉDÉ DE FABRICATION D'UN PRODUIT COMPOSITE ET SON UTILISATION, ET PRODUIT FINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2011  FI 20116139**

(43) Date of publication of application:
**24.09.2014  Bulletin 2014/39**

(73) Proprietor: **UPM-Kymmene Corporation**
**00100 Helsinki (FI)**

(72) Inventors:
• **KOSONEN, Harri**
  **FI-53300 Lappeenranta (FI)**
• **LUUKKO, Kari**
  **FI-02660 Espoo (FI)**
• **TURUNEN, Sami**
  **FI-53300 Lappeenranta (FI)**

• **SALMINEN, Jere**
  **FI-53850 Lappeenranta (FI)**
• **FORS, Stefan**
  **FI-47400 Kausala (FI)**
• **MYLLYTIE, Petri**
  **3912 Porsgrunn (NO)**

(74) Representative: **Tampereen Patenttitoimisto Oy**
**Visiokatu 1**
**33720 Tampere (FI)**

(56) References cited:
**WO-A1-97/30838      WO-A2-02/077077**
**WO-A2-02/077077      WO-A2-2006/102543**

• **MADSEN, B. ET AL.: 'Evaluation of properties of unidirectional hemp/polypropylene composites - influence of fiber content and fiber/matrix interface variables.' PROPERTIES OF PLANT FIBRE YARN POLYMER COMPOSITES. 2004, pages 175 - 185, XP055160854**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 780 420 B1

**Description**

**FIELD OF THE INVENTION**

The invention relates to a composite product. Further, the invention relates to a method for manufacturing a composite product. Further, the invention relates to a final product and a use of the composite product.

**BACKGROUND OF THE INVENTION**

Known from prior art are different wood-polymer composites which are formed from wood-based material and polymers typically by an extrusion.

WO 1997030838 discloses a process for combining cellulosic fiber and thermoplastic polymer materials, coupled with the addition of a controlled amount of a release agent within defined shear rates, to form a composite material which is useful in forming structural members of controllable porosity, thereby permitting the application of stains and/or paints in a manner similar to that of natural wood.

**OBJECTIVE OF THE INVENTION**

The objective of the invention is to disclose a new composite product. Another objective of the invention is to disclose a new method for manufacturing a composite product. Another objective of the invention is to produce a new final product.

**SUMMARY OF THE INVENTION**

The composite product according to the present invention is characterized by what is presented in claim 1.

The method for manufacturing a composite product according to the present invention is characterized by what is presented in claim 10.

The final product according to the present invention is characterized by what is presented in claim 13.

The use of the composite product according to the present invention is characterized by what is presented in claim 15.

**BRIEF DESCRIPTION OF THE FIGURES**

The accompanying figures, which are included to provide a further understanding of the invention and constitutes a part of this specification, illustrate some embodiments of the invention and together with the description help to explain the principles of the invention. In the figures:

Fig. 1 is a flow chart illustration of a method according to one embodiment of the present invention,
Fig 2 is a flow chart illustration of a method according to another embodiment of the present invention, and
Fig 3 is a flow chart illustration of a method according to another embodiment of the present invention.

**DETAILED DESCRIPTION OF THE INVENTION**

In the present invention a composite product is formed. According to the invention the composite product contains a polymer based material and an organic natural fiber material, and the organic natural fiber material has been mixed with the polymer based material to form a mixture, and the composite product having an pore volume has been formed from the mixture so that the pore volume of the composite product is under 15 %, which is preferably determined from the composite product including fiber material and polymer based material. Preferably, the composite product is particle, granulate or the like.

In this context, a composite product is preferably an intermediate product, which is used in a post processing, e.g. by melting, e.g. in an injection moulding or extrusion. In one embodiment a composite product can be used as a final product.

In this context, an organic natural fiber material (later disclosed also as a fiber material) refers any natural material or composition containing fibers, e.g. wood based fibers, plant based fibers, viscose fibers and the like. The organic natural fiber material can include natural fibers as such and/or natural fiber based processed fibers. The organic natural fiber material may contain one or more fiber material components. Preferably, the organic natural fiber material contains at least one fiber based component. In one embodiment the fiber material are based from cellulose. In one embodiment the fiber material contains cellulose fibers. In one embodiment the fiber material contains organic natural fibers and/or parts of fibers. The fiber material may include any natural organic fibers and/or parts of fibers, such as wood fibers, plant fibers and/or their parts and components. In one embodiment the fiber material is in the form of fibers, components and parts of fibers, and/or flakes or their combinations. The fiber material may be modified chemically.

In one embodiment the organic natural fiber material is formed from an organic natural starting material by crushing before the mixing. In this context, the organic natural starting material refers any material or composition containing fibers. In one embodiment the organic natural starting material contains cellulose. The organic natural starting material may contain one or more starting material components. In one embodiment the fiber material is separated from the organic natural starting material. In one embodiment the starting material is modified mechanically and/or chemically. In one embodiment the starting material is in the form of sheet or web or compacted fiber matrix or pieces of compacted fibers, or large fiber or fiber bundles.

In one embodiment the organic natural starting material is selected from pulp based material, mechanical pulp, CMP, TMP, wood flour, sawdust, chip material, cellulose, derivates thereof and their combinations. In one embodiment the organic natural starting material contains pulp based material, e.g. wood or chemical pulp based material. In one embodiment the organic natural fiber material is formed from wood pulp based material. In one embodiment the organic natural fiber material is formed from chemical pulp based material. In one embodiment the organic natural fiber material is formed from chemical pulp based material made from wood. In one embodiment the pulp based material is formed from material selected from the group consisting of pulp board, pulp sheet, roll of pulp, crushed pulp material, derivates thereof and their combinations.

Polymer based material can contain any suitable polymer or polymer composition. In one embodiment the polymer based material is thermoplastic. In one embodiment the polymer based material includes thermoplastic components. In one embodiment the polymer based material is selected from the group consisting of polyolefin, e.g. polyethylene and polypropylene, polystyrene, polyamide, ABS (acrylic nitrile butadiene styrene copolymer), polycarbonate, biopolymer, e.g. polylactide, their derivatives and their combinations. In a preferable embodiment the polymer based material is selected from the group consisting of polyethylene, polypropylene and their combinations. The polymer based material may contain one or more polymer material components. Further, the polymer based material may contain additives and/or fillers, if desired. In one embodiment melt flow rate, MFR, of the polymer based material is under 1000 g/10 min (230°C, 2.16 kg defined by ISO 1133), more preferable 0.1 - 200 g/10 min, most preferable 0.3 - 150 g/10 min. In one embodiment melting point of the polymer based material is under 250 °C, preferably under 220 °C, and more preferable under 190 °C.

Preferably, the fiber material is mixed with the polymer based material to form a mixture. In one embodiment suitable and desired additives can be added into the starting material, the fiber material and/or the mixture.

In one embodiment moisture of the fiber material is under 5 %, preferably under 4 %, more preferable under 3 % and most preferable under 2 %, before the mixing with polymer based material.

In one embodiment the composite product includes the organic natural fiber material 40 - 60 %, and dry composite product absorbs moisture under 1.5% from the weight of the composite product in the time 30 hours (50 % RH and 22 °C atmosphere). In one embodiment the composite product includes the organic natural fiber material 20 - 40 %, and dry composite product absorbs moisture under 1.3% from the weight of the composite product in the time 30 hours (50 % RH and 22 °C atmosphere). In one embodiment moisture uptake from the atmosphere can be measured from the dry composite products. Before the measurement the composite products has to be dried. Composite product should be dried at temperature of 120 °C for 48 hours before the measurement. In all cases the drying temperature should be at least 10 °C lower that the glass transition or melting temperature of the polymer. If the drying temperature is lower than 110 °C, we should use as high drying temperature as possible, vacuum oven (vacuum level preferable below 0.01 mbar), and drying time of 48 hours. For the moisture uptake measurement at least 10 grams of products will be placed on the plate. There should be only one granulate layer on the plate. Moisture uptake will be then measured as a weight increase compared to the weight of dry products. So if the weight of dry composite product increase from 10.0 g to 10.1 g, will the result be 1.0 %. In these measurements conditions are: Temperature is 22 °C and moisture content of air is 50 % RH. Different measurement times can be used depending on the need.

In one embodiment the pore volume of the mixture is under 10 %, preferably under 5 %, more preferable under 2 % and most preferable under 1 %.

In one embodiment the theoretical density of the mixture consisting of fiber material and polymer based material is between 930 - 1600 kg/m$^3$, preferably between 1000 - 1500 kg/m$^3$. The theoretical density varies depending on components of the mixture and their densities. The theoretical density means preferably calculatory density.

Due to the hygroscopic character of organic natural fibers the fibers typically contain moisture. The moisture content of the fibers depend, for example, on the origin of the fibers, on the storing conditions of the fibers, e.g. relative humidity and temperature of the surroundings where the fibers are stored, and on the processing of the fibers. Typically, the presence of moisture cannot be fully excluded while processing organic natural fibers, and in some cases excess moisture can be harmful. In the case of organic natural fiber and thermoplastic or other polymer composites the presence of moisture in processing can cause, for example, deterioration of product properties such as mechanical strength and visual appearance. Processing temperatures of organic natural fiber-thermoplastic/polymer composites are typically above the boiling point of water due to the higher than 100°C melting and/or glass transition temperatures of thermoplastic/polymers. In processing of organic natural fiber-thermoplastic/polymer composites at temperatures above boiling point of water the vaporization of moisture contained in the fibers can cause formation of porosity into the product material. The porosity can appear, for example, in the form of gas bubbles or as voids between fiber surfaces and matrix polymer in the composite product. Another reason for formation of porosity can be inclusion of air or other surrounding gases during processing due to insufficient gas removal in the process. Especially, feeding of reinforcement fibers bring a large volume of gases to be removed in the process. For example, in preparation of organic natural fiber - thermoplastic/polymer composites by compounding extrusion sufficient venting is necessary in order to remove gaseous substances including water vapor, entrained air and other gases, and other volatile components. Formation of porosity into the product material reduces the density of the product material. Ideally, there is no unwanted porosity in the product material. In practice, some porosity may exist no matter how good the process is in regard to minimizing the formation of porosity. Therefore, density can be used as one quantity for characterization of organic natural fiber-thermoplastic/polymer composite material. A composite material can be characterized by its theoretical/calculatory density and its experimental density. Theoretical/calculatory density ($\rho_t$) of a composite material is calculated from the masses and the densities of each individual component according to equation 1:

$$\rho_t = (m_1 + m_2 + \cdots + m_n)/(\tfrac{m_1}{\rho_1} + \tfrac{m_2}{\rho_2} + \cdots + \tfrac{m_n}{\rho_n}) \qquad \text{Eq. (1)}$$

where $m_1$, $m_2$, and $m_n$ are the masses of each individual component of the composite material, e.g. the composite product or the mixture containing fiber material and polymer based material, and $\rho_1$, $\rho_2$, $\rho_n$ are the densities of each individual component of the composite material, e.g. the composite product or the mixture containing fiber material and polymer based material.

In one embodiment the density of the mixture is at least 85 %, preferably over 90 %, more preferable 95 % and most preferable over 98 % of the theoretical density.

In one embodiment the mixture includes 10 to 90 % fiber material, preferably 20 to 80 % fiber material, more preferable 30 to 70 % fiber material.

The organic natural fiber material can be characterized by its shape. Aspect ratio of the fiber is used to describe fiber form. It can be informed many ways like a ratio of the fiber length and fiber diameter. The fiber diameter here is determined that it is the average thickness of the fiber as determinated in the equation 2:

$$D_{Average} = \sqrt{\frac{A_{Fiber}}{\pi}}$$

$$\text{(Eq. 2)}$$

where $D_{Average}$ is the average of fiber diameter
$A_{Fiber}$ is the surface area of fibers

The $A_{Fiber}$ can be determined with the scanning electron microscope form the cross-section of fibers. The surface area of at least 10 fibers is measured and $A_{Fiber}$ is average of those results. The aspect ratio is determined by means of the equation 3:

$$A_r = \frac{d_s}{d_{Average}}$$

$$\text{(Eq. 3)}$$

where $A_r$ is aspect ratio
$d_s$ is the length of fiber
$d_{Average}$ is the average of fiber diameter

In one embodiment aspect ratio relating to ratio of the length to the width is between 5 and 20. In one embodiment aspect ratio relating to ratio of the length to the thickness is between 10 and 60.In one embodiment aspect ratio is between 50 and 250.

In one embodiment the organic natural fiber material contains fiber-form fiber material at least 30 %, preferably at least 50 % and more preferable at least 70 %. In one embodiment the fiber material is mainly in the form of fiber.

In one embodiment a special material component is formed, preferably for using in manufacturing a composite product. In one embodiment the material component is formed from organic natural starting material, such as pulp based starting material e.g. chemical pulp. In one embodiment the material component can be in the form of fibers, fragments of fibers, flakes or their combinations. In one embodiment the material component can be used in mixing with polymer based material. In one embodiment the material component is used in manufacturing of a composite product, a final product or their combinations. In one embodiment the material component of the present invention is used as a final product.

In one embodiment the flake contains at least fragments of fiber. Preferably, the organic fiber material can include at least one fiber or at least one fragment of the fiber. In a preferred embodiment the fiber material includes at least two fibers and/or fragments of the fibers jointed together.

In one embodiment the fiber of the fiber material has shape ratio relating to ratio of the fiber length to the fiber thickness is at least 30.

In the method of the present invention, a composite product is formed. According to the invention, a polymer based material and an organic natural fiber material are selected, and the organic natural fiber material is mixed with the polymer based material to form a mixture, and the composite product having an pore volume is formed from the mixture so that the pore volume of the mixture is under 15 %.

In this context, crushing means any crushing, grinding, cutting or the like or their combinations.

In one embodiment the organic natural starting material is crushed by a grinding method selected from the group consisting of crushing-based grinding, attrition-based grinding, abrasion-based grinding, cutting-based grinding, blasting-based grinding, explosion-based grinding, wet grinding, dry grinding, grinding under pressure and their combinations. In one embodiment the starting material is crushed by a crushing-based grinding. In one embodiment the starting material is crushed by a cutting grinding. Preferably, the starting material is crushed so that wherein fibers are separated and cut from the organic natural starting material. In one embodiment the grinding device used for grinding the starting material is selected from the group consisting of impact mill, air jet mill, sand mill, bead mill, pearl mill, ball mill, vibration mill, screw mill and their combinations. The grinding can be made in one or more grinding steps by one or more grinding methods. In one embodiment the fiber material is formed by grinding a starting material in one or more steps.

In one embodiment the fiber material is pre-treated in a pre-treatment stage after the crushing. In one embodiment the method comprises at least one pre-treatment stage. In one embodiment the pre-treatment stage contains at least one step which is selected from the group consisting of heating, cooling, mixing, heat-cool mixing, agglomeration, pre-granulation, pelleting and their combinations. In one embodiment polymer based material is mixed with the fiber material during the pre-treatment. In one embodiment the mixing is carried out by a heat-cool mixer, internal mixer, e.g. Banbury, continuous mixer or other suitable device.

In the heat-cool mixer the fiber material and polymer based material can be mixed and agglomerated to homogeneous compound. The fiber content is adjustable within a wide range, and high contents are easy to achieve.

In a preferred embodiment, the fiber material is incorporated to polymer based material without compression and pressure. In one embodiment the fiber material is mixed with polymer based material without compression to form a mixture. In one embodiment the fibers of the fiber material are treated without compression between the crushing and the mixing with polymer based material. In one embodiment pressure in blending is between 0 - 100 bar. Preferably, such pressure is used that bonds between fibers are not formed, i.e. the mixing of the fiber material and polymer based material is made without forming of the bonds between fibers of the fiber material. In one embodiment pressure difference to normal atmosphere is below 10 bar. In one embodiment pressure difference to normal atmosphere is more preferably below 3 bar. In one embodiment pressure difference to normal atmosphere is the most preferably below 1 bar. In one embodiment pressure difference to normal atmosphere is between 0.001 - 8 bar. In one embodiment pressure difference to normal atmosphere is more preferably 0.002 - 2 bar. In one embodiment pressure difference to normal atmosphere is the most preferably 0.003 - 0.5 bar.

In one embodiment fiber bulk density of the fiber material is under 300 $kg/m^3$, in one embodiment under 150 $kg/m^3$, in one embodiment under 100 $kg/m^3$, and in one embodiment under 70 $kg/m^3$. Then the fiber material can be incorporated to polymer based material easily.

In one embodiment desired additives and/or fillers are added into the mixture of the fiber material and polymer based material. In one embodiment an additive is selected from the group consisting of property enhancers, coupling agent, adhesion promoter, lubricant, rheology modifiers, releaser agent, fire retardant, coloring agent, anti-mildew compound, protective agent, antioxidant, uv-stabilizer, foaming agent, curing agent, coagent, catalyst and their combinations. In one embodiment filler is selected from the group of fibrous material, organic fillers, inorganic fillers, powdery reinforcements, talc, wood fibers, natural organic fibers and their combinations.

In one embodiment the composite product is in the form of particles. In this invention particle refer to any granulate, agglomerate, pellet or the like. In one embodiment the composite product is in the form of granulates. In one embodiment the composite product is formed by a granulation method. In this context, the granulation method refers to any granulation method, pelleting method, agglomeration method or their combinations.

In a preferred embodiment the sizes of the granulates are in the same range. The weight of the granulate is 0.01 - 0.10 g, and in one embodiment more, and in one embodiment less. Preferably, the weight of the granulates is 0.015 - 0.05. Hundred granulates weight is 1 - 10 g. Preferably, the weight of the 100 granulates is 1.5 - 5 g. More preferable the weight of 100 granulates is 2.5 - 4.5 g. Standard deviation is under 10 %, preferably under 5 %, more preferable under 2 %.

In one embodiment the composite product is formed by the method selected from the group consisting of extrusion, granulation, mixing method, pelletization and their combinations. In one embodiment the composite product can be formed by means of mixing device, internal mixer, kneader, pelletizer, pultrusion method, pull drill method, extrusion device or their combinations.

In one embodiment of the invention a mixture containing fiber material and polymer based material is extruded. In one embodiment the mixture is extruded after a pre-treatment. In one embodiment the fiber material is supplied into the extrusion directly after the crushing. In one embodiment the polymer based material is mixed with the fiber material in connection with the extrusion without the pre-treatment stage. In the extrusion any suitable single-screw extruder or twin-screw extruder, such as counter-rotating twin-screw extruder or co-rotating twin-screw extruder, may be used. In one embodiment different pelleting tools can be used in connection with the extruder. In one embodiment extrusion stage comprises a granulation step. In one embodiment the granulation step is arranged after the extrusion. In one embodiment the granulation step is a separate stage after the extrusion stage.

In one embodiment the granulation is carried out by means of a method selected from the group consisting of water ring, underwater pelleting, air cooled, hot face and their combinations. In one embodiment the granulation is made under water. In one embodiment the granulation is carried out by means of counterpressure, e.g. with underwater method. In one embodiment the counterpressure is at least 1.5 bar (absolute pressure), in one embodiment at least 3 bar (absolute pressure), in one embodiment at least 5 bar (absolute pressure) and in one embodiment at least 8 bar (absolute pressure).

In one embodiment the cooling medium is gas or liquid. Preferably medium is liquid. More preferably liquid is mostly water.

In one embodiment a retention time under water is under 15 sec. Preferably time is less than 5 sec and most preferable time is less than 2 sec. Technical effect of short time is that less water has been penetrated to the granulates.

In one embodiment the temperature of the water is over 40 celcius degree, preferably 65 celcius degree and most preferably over 75 celcius degree.

In one embodiment the temperature of the water is less than 95 celcius degree and preferably less than 90 degree and most preferably less than 85 celcius degree. When water is in this temperature granulates has enough energy to evaporate the moisture from the granules after extrusion.

In one embodiment the temperature of the granulates after solidify stage in which liquid and granulates has been separated is over 100 celcius degree, preferably over 120 celcius degree, preferably over 140 celcius degree.

In one embodiment the temperature of the granulates after solidify stage in which liquid and granulates has been separated is 20 celcius degree less than glass transition temperature or melting temperature of the polymer, preferably 10 celcius degree and more preferably 5 celcius degree.

Composite product containing polymer material has often ability that it swell after passing the hole of die. Due to the die swell the diameter of granulates can larger that diameter of die holes. Die swell can be also related to formation and expansion of gas inside the composite product. Die swell in this content is a ration between the average diameter of granulates and the diameter of die holes. In one embodiment die swell is below 1.15. In one embodiment die swell is more preferably below 1.00. In one embodiment the die swell is the most preferably between 0.95 - 0.85.

In one embodiment the diameter of the granule is less than 1.5 time of diameter of hole of the die, preferably 1.03 and most preferably 0.98.

In one embodiment the granulates of the composite product are used in the forming of the final product.

A technical effect is to provide homogeneous free-flowing granulates. An additional technical effect is to produce granulates for further processing. It is important for the invention that good compounding is achieved between the organic natural fiber material and polymer based material.

The main task of granulating, or pelleting, is to produce homogeneous free-flowing granulates for further processing. In several processes, e.g. extrusion and injection moulding, easily dosable granulates are required for good production. Pre-granulation is more important when organic natural fibers are used. Natural fiber plastic granulates can be manufactured with different methods. The most important part of granulating organic natural fiber composite is not necessarily granulate production, but good compounding of the material components, e.g. components of natural fiber and polymer based materials.

Production of granulates have two important targets: compounding and forming of granulates. These can be made with one machine or with different machines. Simplest way to produce natural fiber-polymer granulates is to use one machine which compound material components and forms this material to granulates. One example of this kind of machine is compounding twin screw extruder with granulation tool. Pretreated material components are fed into compounding extruder at the beginning of the screws so melting can start as soon as possible. Material components could be polymer, e.g. plastic, natural fibers, additives and fillers. In some cases, fibers can be fed later to avoid fiber break-ups. Adding fibers later into extruder can also affect dispersion of fibers and plastic. Polymer is melted mainly with friction, but some external heat can be used. Polymer, additives and fibers are mixed when they are moving through screw barrel. Melt compound is pressed through granulation tool, which is for example underwater pelletizer, and granulate is formed.

Compounding can also be done with different machine than granulate forming. Compounding can be made with e.g. extruders, which can be divided into single, twin or multiple screw machines. The single screw can be with smooth, grooved or pin barrel machine. The twin screw extruder can be conical co-rotating twin screw extruder, conical counter-rotating twin screw extruder, parallel co-rotating twin screw extruder, parallel counter-rotating twin screw extruder. The multiple screw extruders can be with rotating or static center shaft. Compounding can be done also with mixers like internal mixer, heating-cooling mixer or z-blade mixer, or with whatever mixing device where polymer is melted with friction or internal heat and fibers are incorporated to polymer and other components. The mixing can be batch or continuous process. The mixing can happen in low or high rotation speed; where low is 10 rpm and high e.g. 2000 rpm. Compounding can be done with any of these or combination of these and some other process steps. Any of mixers or extruders might contain some pre or post processing directly included to extruder or mixer or by connecting shortly before or after extruder. For example, shredding, drying, mixing or their combinations can be done in continuous process directly connected to extruder.

Forming of granulates is usually made with granulation tool which is attached to extruder or melt pump. Granulating tool can be either a cold face cutter or a hot face cutter. In cold face cutter composite granulates are formed when plastic is in solid form. One example of cold face cutter granulating tool is strand pelletizer. In hot face cutter granulates are cut in melt form at the die plate. Hot face cutter pelleting units can be divided into three categories: cutting and cooling in the air, cutting and cooling in water or cutting in the air and cooling in water.

In one embodiment, the granulates are finish-treated. Finish-treatments for granulates are for example drying, dust removing and packing.

In one embodiment the composite product is natural fiber-polymer composite product. In one embodiment a composite product is formed wood based material and polymer based material. According to the invention the wood based material is formed from pulp based starting material containing cellulose fibers, and the starting material has been crushed by grinding, and the wood fiber material is mixed polymer based material. In one embodiment the pulp based starting material is formed from material selected from the group consisting of pulp board, pulp sheet, roll of pulp, crushed pulp material, derivates thereof and their combinations. In one embodiment the pulp based fiber material is mixed with polymer based material without compression to form a fiber-polymer mixture. In one embodiment desired additives may be added into the mixture.

In one embodiment the composite product is used in manufacturing of a final product. In one embodiment the composite product of the present invention is used as a final product. The final product may be manufactured from the composite product, e.g. granulates, by any suitable method, for example by an injection moulding, re-extrusion, profile extrusion or the like.

The present invention provides composite products and final products with good quality. The method of the present invention offers a possibility to prepare the products from the organic natural starting material and the fiber material cost-effectively and energy-effectively. The present invention provides composite products and final products with good quality.

The present invention provides an industrially applicable, simple and affordable way of making the composite products and final products from the organic natural material. The method according to the present invention is easy and simple to realize as a production process.

The method according to the present invention is suitable for use in the manufacture of the different products from different organic natural materials.

## EXAMPLES

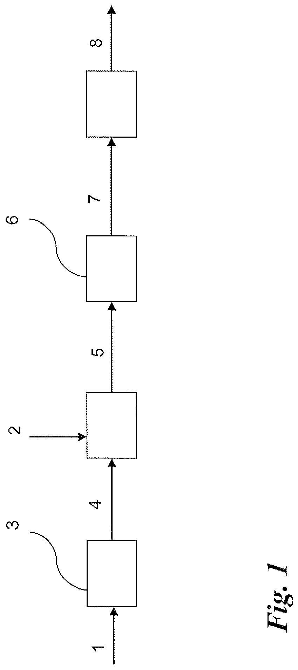

The invention is described in more detail by the following examples with reference to accompanying figures 1, 2 and 3.

Example 1

In this example, which is shown in figure 1, a composite product is formed from organic starting material (1) and polymer based material (2). The organic natural starting material is pulp based material. Polymer based material is polyethylene.

The organic natural starting material (1) is crushed (3) by cutting grinding to form a fiber material. The fibers (4) of organic natural starting material (1) are mixed with polymer-based material (2) without compression to form a mixture (5). The composite product (7) is formed from the mixture by an extrusion stage (6). The composite product is in the form of granulates. The weight of 100 granulates is 3 - 4 g. The organic natural fibers in this example has preferably the aspect ratio above 5, more preferably above 40 and the most preferably above 80.

A final product (8) is formed from the composite product granulates, e.g. by an additional extrusion step.

Example 2

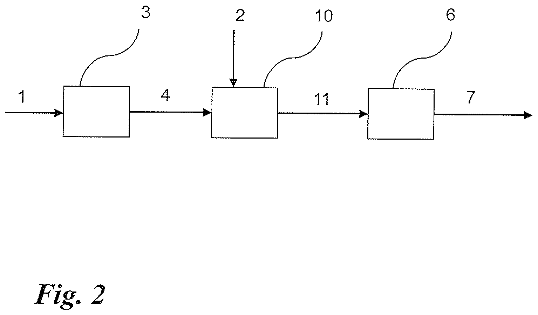

In this example, which is shown in figure 2, a composite product is formed from organic starting material (1) and polymer based material (2). The organic natural starting material is pulp based material. Polymer based material is polyethylene.

The organic natural starting material (1) is crushed to form a fiber material (4) and after the crushing (3) the fiber material (4) are pre-treated by a heat-cool mixing (10) in which agglomerates (11) are formed. Polymer-based material (2) is added into the fiber material (4) of the starting material (1) in connection with the heat-cool mixing (10). The agglomerates (11) containing the fiber material and polymer-based material are fed in the extrusion stage (6) in which the composite product (7) is formed.

Example 3

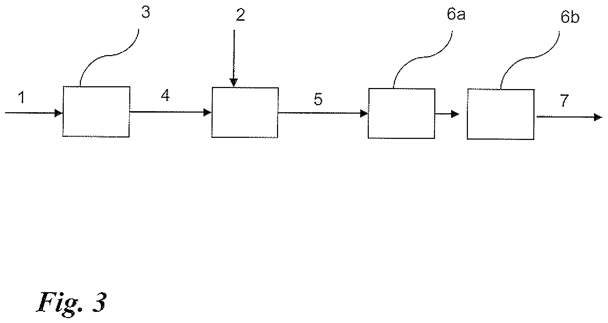

In this example, which is shown in figure 3, a composite product (7) is formed from a mixture (5) containing fiber material (1) and polymer based material (2) by an extrusion stage (6a-b).

In the extrusion stage (6) the mixture (5) is extruded in the extrusion step (6a) and granulated in the granulation step (6b). In the granulation (6b) is used counterpressure. Absolute pressure is between 2 - 10 bar and more preferably 2.5 - 9 bar. The retention time under water is between 0.1 - 7 sec, and more preferably 0.2 - 4 sec. Most preferable the retention time under water is between 0.3 - 1. The diameter of the granule is less than 1.1 times of diameter of hole of the die, preferably 1.04 and most preferably 0.96.

Example 4

One example of this kind of machine is compounding with co-rotating twin screw extruder with strand pelletizing. Material components are fed into main feed of compounding extruder at the beginning of the screws so melting can start as soon as possible. Material components are polypropylene, slightly modified cellulose fiber from birch tree, coupling agent and lubricant in ratio 30:66:3:1. Polymer is melted mainly with friction, but some external heat can be used. Polymer, additives and fibers are mixed when they are moving through screw barrel. Melt compound is pressed through die plate, when strand is formed. The strand is cooled by air and conveyed to granulator, where granules with diameter 3.5 mm and length from 1 to 5 mm is formed.

Example 5

One example of this kind of machine is compounding with conical counter-rotating twin screw extruder with under water pelletizing tool. Material components are fed into main feed of compounding extruder at the beginning of the screws so melting can start as soon as possible. Material components are polyethylene, slightly modified cellulose fiber from Conifer tree, coupling agent and mineral filler $CaCO_3$ in ratio 50:40:3:7. Polymer is melted mainly with friction, but some external heat can be used. Polymer, additives and fibers are mixed when they are moving through screw barrel. Melt compound is pressed through die plate to water in chamber, where cutting tool is forming pellets with diameter 4.2 mm and length 4 mm from the melt strand.

Example 6

One example of this kind of machine is compounded with single screw extruder with screening unit and water ring pelletizing tool. Material components are fed into main feed of extruder at the beginning of the screws so melting can start as soon as possible. Material components are polystyrene, slightly modified cellulose fiber from Eucalyptus tree, coupling agent and lubricant in ratio 90:7:3:1. Polymer is melted mainly with friction, but some external heat can be used. Polymer, additives and fibers are mixed when they are moving through screw barrel. Melt compound is pressed through die plate. After cutting the pellets are cooled with water. Diameter and lengths of pellets are 3.6 mm and 6 mm correspondingly.

Example 7

In this example a material component, such as fiber material, is formed from the chemical pulp based starting material. The fiber material with low moisture content is mechanically and/or chemically modified.

The fiber material granulates are mixed with polymer based material, polyethylene, to form pellets. High density and low density fiber material granulates are used. High density means density, which is under 7 % smaller than the theoretical density. Low density means density, which is 7 - 15 % smaller than the theoretical density.

Table 1 shows the pellet of the mixture comprising of polyethylene and cellulose fibers with different mass content of cellulose fibers.

Table 1. Moisture uptake of pellets in 50 % RH and 22 °C atmosphere. Pellet moisture measured by weighting, %.

| Pellet moisture, wt-% | | | | | | | |
|---|---|---|---|---|---|---|---|
| | High density | High density | Lower density | Lower density | Lower density | Competitor K | Competitor S |
| h | Fiber 50 % | Fiber 40 % | Fiber 20 % | Fiber 30 % | Fiber 40 % | Fiber 55 % | Wood 50 % |
| 0 | 0.00 | 0.00 | 0.00 | 0.00 | 0.00 | 0.00 | 0.00 |
| 0.5 | 0.04 | 0.08 | 0.06 | 0.06 | 0.11 | 0.32 | 0.23 |
| 1 | 0.09 | 0.10 | 0.07 | 0.07 | 0.14 | 0.53 | 0.37 |
| 2 | 0.15 | 0.12 | 0.08 | 0.09 | 0.18 | 0.79 | 0.54 |
| 3 | 0.20 | 0.13 | 0.09 | 0.10 | 0.20 | 0.97 | 0.67 |
| 4 | 0.24 | 0.15 | 0.09 | 0.11 | 0.23 | 1.11 | 0.78 |
| 5 | 0.28 | 0.17 | 0.10 | 0.11 | 0.25 | 1.23 | 0.87 |
| 6 | 0.32 | 0.18 | 0.11 | 0.12 | 0.27 | 1.31 | 0.95 |
| 30 | 0.72 | 0.35 | 0.18 | 0.22 | 0.56 | 1.88 | 1.78 |

When the composite product includes the organic natural fiber material 40 - 60 %, dry composite product absorbs moisture under 0.2%, preferably under 0.15 and more preferable under 0.1 from the weight of the composite product in the time 30 min (50 % RH and 22 °C atmosphere). In one embodiment fiber content is 40 - 60 %, 30 min; absorption under 0.2, preferably under 0.15 and more preferable under 0.1.

When the composite product includes the organic natural fiber material 20 - 40 %, dry composite product absorbs moisture under 0.15% preferably under 0.13 and more preferable under 0.1 from the weight of the composite product in the time 30 min (50 % RH and 22 °C atmosphere). In one embodiment fiber content is 20 - 40 %, 30 min; absorption under 0.15, preferably under 0.13 and more preferable under 0.1.

When the composite product includes the organic natural fiber material 40 - 60 %, dry composite product absorbs moisture under 0.9% preferably under 0.7 and more preferable under 0.5 from the weight of the compo-site product in the time 6 hours (50 % RH and 22 °C atmosphere). In one embodiment fiber content is 40 - 60 %, 6 h; absorption under 0.9, preferably under 0.7 and more preferable under 0.5.

When the composite product includes the organic natural fiber material 20 - 40 %, dry compo-site product absorbs moisture under 0.8% preferably under 0.5 and more preferable under 0.3 from the weight of the compo-site product in the time 6 hours (50 % RH and 22 °C atmosphere). In one embodiment fiber content is 20 - 40 %, 6 h; absorption under 0.8, preferably under 0.5 and more preferable under 0.3.

When the composite product includes the organic natural fiber material 40 - 60 %, dry compo-site product absorbs moisture under 1.5% preferably under 1.0 and more preferable under 0.8 from the weight of the compo-site product in the time 30 hours (50 % RH and 22 °C atmosphere). In one embodiment fiber content is 40 - 60 %, 30 h; absorption under 1.5, preferably under 1.0 and more preferable under 0.8.

When the composite product includes the organic natural fiber material 20 - 40 %, dry compo-site product absorbs moisture under 1.3% preferably under 0.8 and more preferable under 0.5 from the weight of the compo-site product in the time 30 hours (50 % RH and 22 °C atmosphere). In one embodiment fiber content is 20 - 40 %, 30 h; absorption under 1.3, preferably under 0.8 and more preferable under 0.5.

From the results it can be discovered that in high density pellets fibers are well covered and thus sealed with polymer due to fact of low porosity (solid structure) and low specific surface area. Thus pellets are less sensitive for moisture uptake from atmosphere and are not so sensitive for open air storing of pellets after drying.

Example 8

This example discloses a method for making the density of the material.

A suitable process for making the density of the composite product is following. The components of the composite product are compounded with extruder equipped with pelletizer. The fiber materials are handled in such way that the moisture entering into the extruder is low and the fiber and polymer based materials are fed into the extruder in such way that the inclusion of air or other gases into the extruder with the materials is quite low. Here low means that the volume of air or other gases is below 5 volume percent. The extruder is designed to have sufficient venting in order to remove gaseous substances including water vapor, entrained air and other gases, and other volatile components. The pelletizing is done in such way that the moisture content of the material is quite low (below 0.5 weight percent) and the density of the material is quite high (less than 5 percent lower that the theoretical density).

Example 9

This example describes the theoretical/calculatory densities of composite products.

For example, the theoretical/calculatory density of a binary composite product comprising of polypropylene and cellulose fibers with densities of 0.91g/cm$^3$ and 1.5g/dm$^3$, respectively, can be calculated according to equation:

$$\rho_t = (m_{PP} + m_{cell.})/\left(\frac{m_{PP}}{\rho_{PP}} + \frac{m_{cell.}}{\rho_{cell.}}\right) \qquad \text{Eq. (2)}$$

where $m_{PP}$ is the mass fraction of polypropylene and $m_{cell.}$ is the mass fraction of cellulose fibers in the binary composite product comprising of polypropylene and cellulose fibers and $\rho_{PP}$ is the density of polypropylene (0.91g/cm$^3$) and $\rho_{cell.}$ is the density of cellulose fiber wall (1.5g/dm$^3$). Table 2 shows the theoretical/calculatory density of a binary composite product comprising of polypropylene and cellulose fibers with different mass content of cellulose fibers.

Table 2. Theoretical/calculatory density of binary composite product comprising of polypropylene and cellulose fibers.

| Cellulose fiber content, mass % | Theoretical/calculatory density, g/cm$^3$ |
|---|---|
| 0 | 0.91 |
| 10 | 0.95 |
| 20 | 0.99 |
| 30 | 1.03 |
| 40 | 1.08 |
| 50 | 1.13 |
| 60 | 1.19 |
| 70 | 1.26 |
| 80 | 1.33 |
| 90 | 1.41 |
| 100 | 1.50 |

If the composite product comprises of a different thermoplastic polymer material than polypropylene or different fibers than cellulose fibers (it must be noted that all cellulose fibres do not have same density) or contain more than two components in addition to thermoplastic polymers and fibers, such as other polymers, additives, and inorganic and organic fillers, the theoretical/calculatory density is calculated from the masses and the densities of each individual components according to equation 2.

For example, the theoretical/calculatory density of a composite product comprising of polypropylene, cellulose fibers, and talcum with densities of 0.91g/cm$^3$, 1.5g/cm$^3$, and 2.7g/cm$^3$, respectively, can be calculated according to equation:

$$\rho_t = (m_{PP} + m_{cell.} + m_{talcum})/(\frac{m_{PP}}{\rho_{PP}} + \frac{m_{cell.}}{\rho_{cell.}} + \frac{m_{talcum}}{\rho_{talcum}}) \qquad \text{Eq. (3)}$$

where $m_{PP}$ is the mass fraction of polypropylene, $m_{cell.}$ is the mass fraction of cellulose fibers, and $m_{talcom}$ is the mass fraction of talcum in the composite product comprising of polypropylene, cellulose fibers and talcum, and $\rho_{PP}$ is the density of polypropylene ($0.91 g/cm^3$) and $\rho_{cell.}$ is the density of cellulose fiber wall ($1.5 g/dm^3$), and $\rho_{PP}$ is the density of talcum ($2.7 g/cm^3$). Table 3 shows the theoretical/calculatory density of a composite product comprising of polypropylene, cellulose fibers, and talcum with different mass content of cellulose fibers and fixed content of talcum of 10 mass percent.

Table 3. Theoretical/calculatory density of a composite product comprising of polypropylene, cellulose fibers, and talcum with different mass content of cellulose fibers and fixed content of talcum of 10 mass percent.

| Cellulose fiber content, mass % | Theoretical/calculatory density, g/cm3 |
|---|---|
| 0 | 0.97 |
| 10 | 1.02 |
| 20 | 1.06 |
| 30 | 1.12 |
| 40 | 1.17 |
| 50 | 1.23 |
| 60 | 1.30 |
| 70 | 1.38 |
| 80 | 1.47 |
| 90 | 1.57 |

For example, the theoretical/calculatory density of a composite product comprising of another thermoplastic polymer, cellulose fibers, and talcum with densities of $1.24 g/cm^3$, $1.5 g/cm^3$, and $2.7 g/cm^3$, respectively, can be calculated according to equation:

$$\rho_t = (m_{tp} + m_{cell.} + m_{talcum})/(\frac{m_{tp}}{\rho_{tp}} + \frac{m_{cell.}}{\rho_{cell.}} + \frac{m_{talcum}}{\rho_{talcum}}) \qquad \text{Eq. (4)}$$

where $m_{tp}$ is the mass fraction of a thermoplastic polymer, $m_{cell.}$ is the mass fraction of cellulose fibers, and $m_{talcom}$ is the mass fraction of talcum in the composite product comprising of a thermoplastic polymer, cellulose fibers and talcum, and $\rho_{tp}$ is the density of another thermoplastic polymer ($1.24 g/cm^3$) and $\rho_{cell.}$ is the density of cellulose fiber wall ($1.5 g/dm^3$), and $\rho_{PP}$ is the density of talcum ($2.7 g/cm^3$). Table 4 shows the theoretical/calculatory density of a composite product comprising of a thermoplastic polymer, cellulose fibers, and talcum with different mass content of cellulose fibers and fixed content of talcum of 10 mass percent.

Table 4. Theoretical/calculatory density of a composite product comprising of a thermoplastic polymer, cellulose fibers, and talcum with different mass content of cellulose fibers and fixed content of talcum of 10 mass percent.

| Cellulose fiber content, mass % | Theoretical/calculatory density, g/cm3 |
|---|---|
| 0 | 1.31 |
| 10 | 1.34 |
| 20 | 1.36 |
| 30 | 1.39 |
| 40 | 1.41 |
| 50 | 1.44 |
| 60 | 1.47 |

(continued)

| Cellulose fiber content, mass % | Theoretical/calculatory density, g/cm3 |
|---|---|
| 70 | 1.50 |
| 80 | 1.54 |
| 90 | 1.57 |

A composite product can be characterized by its theoretical/calculatory density and its experimental density. The experimental density of the material can be measured with several techniques including standard methods for determination of density of plastics, such as EN ISO 1183-1, ISO 1183-2, ISO 1183-3:2004, and their counterparts in other standards organizations. The experimental density of the material can be measured also with other methods, such as laboratory and on-line density sensors and float/sink tests with different liquids of given density. In addition, density of a composite material can be determined, for example, by compressing a sample of a composite material at elevated temperature and by applying vacuum at the same time, and thereafter by measuring the density of the formed pressed and cooled sample material by methods such as ISO 1183-1, ISO 1183-2, ISO 1183-3, and their counterparts in other standards organizations, laboratory and on-line density sensors, and float/sink tests with different liquids of given density.

A composite product can be characterized by its theoretical/calculatory density and its experimental density. Alternatively, a composite product can be characterized by its pore volume which can be related to the experimental density of the material. Pore volume can be indirectly determined by methods used for determination of density such as EN ISO 1183-1, ISO 1183-2, ISO 1183-3:2004, and their counterparts in other standards organizations, laboratory and on-line density sensors and float/sink tests with different liquids of given density, and by compressing a sample of a composite material at elevated temperature and by applying vacuum at the same time, and thereafter by measuring the density of the formed pressed and cooled sample material by methods such as ISO 1183-1, ISO 1183-2, ISO 1183-3, and their counterparts in other standards organizations, laboratory and on-line density sensors, and float/sink tests with different liquids of given density. A composite product can be characterized by its theoretical/calculatory density and its experimental density. Alternatively, a composite product can be characterized by its pore volume. Pore volume can be directly determined by methods employed for porosity measurements, such as computed tomography methods, water saturation and water evaporation methods, and thermoporosimetry. Pore volume can be determined directly, indirectly, and by their combinations.

A composite product can be characterized by its theoretical/calculatory density and its experimental density. Theoretical/calculatory density of a composite product is calculated from the masses and the densities of each individual component according to equation 1. The calculation of the theoretical/calculatory density of a composite product requires knowledge of the composition of the composite product. When the composition of the composite product is unknown several analysis methods can be used for determination of the composition of the composite product. Analysis methods suitable for determination of the composition of an unknown component include, but are not limited to, physical, chemical, thermal, optical, and microscopy analysis techniques. The composition of an unknown composite product can be analyzed, for example, with thermogravimetric, calorimetric, spectroscopic, and microscopic analysis, and by selectively dissolving the different components comprising the unknown composite product in order to resolve the components and the mass fraction of the components comprising the unknown composite product.

Example 10

This example discloses a method for making the density of the material.

A suitable process for making the density of the composite product is following. The components of the composite product are compounded with extruder equipped with pelletizer. The fiber materials are handled in such way that the moisture entering into the extruder is low and the fiber and polymer based materials are fed into the extruder in such way that the inclusion of air or other gases into the extruder with the materials is low. Here low means that the volume of air or other gases is below 1 volume percent. The extruder is designed to have sufficient venting in order to remove gaseous substances including water vapor, entrained air and other gases, and other volatile components. The pelletizing is done in such way that the moisture content of the material is low (below 0.3 weight percent) and the density of the material is high (less than 3 percent lower that the theoretical density).

Example 11

This example discloses a method for making the density of the material.

A suitable process for making the density of the composite product is following. The components of the composite product are compounded with extruder equipped with pelletizer. The fiber materials are handled in such way that the moisture entering into the extruder is low and the fiber and polymer based materials are fed into the extruder in such way that the inclusion of air or other gases into the extruder with the materials is very low. Here low means that the volume of air or other gases is below 0.5 volume percent. The extruder is designed to have sufficient venting in order to remove gaseous substances including water vapor, entrained air and other gases, and other volatile components. The pelletizing is done in such way that the moisture content of the material is very low (below 0.1 weight percent) and the density of the material is very high (less than 1 percent lower that the theoretical density).

Example 12

This example discloses a method for making the density of the material.
A suitable process for making the density of the composite product is following. The components of the composite product are compounded with co-rotating twin screw extruder equipped with underwater pelletizer. The fiber materials are handled in such way that the moisture entering into the extruder is low and the fiber and polymer based materials are fed from main and side feeding sections with forcing feeders into the extruder in such way that the inclusion of air or other gases with the materials is low. The extruder is designed to have sufficient venting in order to remove gaseous substances including water vapor, entrained air and other gases, and other volatile components. The underwater pelletizing is done in such way that the moisture content of the material is low and the density of the material is high.

Example 13

This example discloses a method for making the density of the material.
A suitable process for making the density of the composite product is following. The components of the composite product are compounded with co-rotating twin screw extruder equipped with underwater pelletizer. The fiber materials are handled in such way that the moisture entering into the extruder is low and the fiber and polymer based materials are fed from main and side feeding sections with forcing feeders into the extruder in such way that the inclusion of air or other gases with the materials is low. The extruder is designed to have sufficient venting in order to remove gaseous substances including water vapor, entrained air and other gases, and other volatile components. The underwater pelletizing is done in such way that the moisture content of the material is low and the density of the material is high.
The material components and composite products according to the present invention are suitable in different embodiments to be used in different final products. The method according to the present invention is suitable in different embodiments to be used for manufacturing the most different kinds of composite products.
The invention is not limited merely to the example referred to above; instead many variations are possible within the scope of the inventive idea defined by the claims.

**Claims**

1. A composite product comprising a mixture of organic natural fiber material formed from chemical pulp based material mixed with melted polymer based material, and the composite product formed from the mixture having a pore volume less than 15 %.

2. The composite product according to claim 1, **characterized in that** the organic natural fiber material is formed from an organic natural starting material by crushing before the mixing.

3. The composite product according to claim 1 or 2, **characterized in that** the composite product includes the organic natural fiber material 40 - 60 %, and dry composite product absorbs moisture under 1.5% from the weight of the composite product in the time 30 hours (50 % RH and 22 °C atmosphere).

4. The composite product according to claim 1 or 2, **characterized in that** the composite product includes the organic natural fiber material 20 - 40 %, and dry composite product absorbs moisture under 1.3% from the weight of the composite product in the time 30 hours (50 % RH and 22 °C atmosphere).

5. The composite product according to any one of claims 1 to 4, **characterized in that** pore volume of the mixture is under 10 %.

6. The composite product according to any one of claims 1 to 5, **characterized in that** the pore volume is under 5 %.

7. The composite product according to any one of claims 1 to 6, **characterized in that** density of the composite product is at least 85 % of the theoretical density.

8. The composite product according to any one of claims 1 to 7, **characterized in that** the theoretical density is between 930 - 1600 kg/m$^3$.

9. The composite product according to any one of claims 1 to 8, **characterized in that** the composite product is in the form of granulates.

10. A method for manufacturing a composite product, wherein polymer based material and organic natural fiber material formed from chemical pulp based material are selected, and organic natural fiber material is mixed with melted polymer based material to form a mixture, and the composite product having a pore volume is formed from the mixture so that the pore volume of the composite product is under 15%.

11. The method according to claim 10, **characterized in that** the composite product is formed by the granulation in order to form the composite product in the form of granulates.

12. The method according to claim 10 or 11, **characterized in that** the organic natural fiber material is formed from an organic natural starting material by crushing before the mixing.

13. A final product, **characterized in that** the final product is formed from the composite product according to any one of claims 1 to 9 or the composite product resulting from the method of any one of claims 10 to 12.

14. The final product according to claim 13, **characterized in that** the final product is formed from the granulates of the composite product.

15. A use of the composite product according to any one of claims 1 to 9, **characterized in that** the composite product is used in manufacturing a final product.

## Patentansprüche

1. Verbundprodukt, das eine Mischung aus organischem natürlichem Fasermaterial umfasst, welche ausgehend von einem zellstoffbasierten Material hergestellt wird, das mit einem geschmolzenen polymerbasierten Material vermischt wird, wobei das Verbundprodukt, das aus der Mischung hergestellt wird, ein Porenvolumen von weniger als 15 % aufweist.

2. Verbundprodukt nach Anspruch 1, **dadurch gekennzeichnet, dass** das organische natürliche Fasermaterial ausgehend von einem organischen natürlichen Rohstoff hergestellt wird, indem vor dem Vermischen ein Quetschungsvorgang erfolgt.

3. Verbundprodukt nach Anspruch 1 oder 2, **dadurch gekennzeichnet, dass** das Verbundprodukt das organische natürliche Fasermaterial zu 40 bis 60 % umfasst, wobei das wasserfreie Verbundprodukt im Zeitraum von 30 Stunden (Umgebungsbedingungen 50 % RH und 22 °C) weniger als 1,5 % Feuchtigkeit aufnimmt, bezogen auf das Gewicht des Verbundprodukts.

4. Verbundprodukt nach Anspruch 1 oder 2, **dadurch gekennzeichnet, dass** das Verbundprodukt das organische natürliche Fasermaterial zu 20 bis 40 % umfasst, wobei das wasserfreie Verbundprodukt im Zeitraum von 30 Stunden (Umgebungsbedingungen 50 % RH und 22 °C) weniger als 1,3 % Feuchtigkeit aufnimmt, bezogen auf das Gewicht des Verbundprodukts.

5. Verbundprodukt nach einem beliebigen der Ansprüche 1 bis 4, **dadurch gekennzeichnet, dass** das Porenvolumen der Mischung weniger als 10 % beträgt.

6. Verbundprodukt nach einem beliebigen der Ansprüche 1 bis 5, **dadurch gekennzeichnet, dass** das Porenvolumen weniger als 5 % beträgt.

7. Verbundprodukt nach einem beliebigen der Ansprüche 1 bis 6, **dadurch gekennzeichnet, dass** die Dichte des

**EP 2 780 420 B1**

Verbundprodukts mindestens 85 % der theoretischen Dichte beträgt.

8. Verbundprodukt nach einem beliebigen der Ansprüche 1 bis 7, **dadurch gekennzeichnet, dass** die theoretische Dichte zwischen 930 und 1.600 kg/m$^3$ beträgt.

9. Verbundprodukt nach einem beliebigen der Ansprüche 1 bis 8, **dadurch gekennzeichnet, dass** das Verbundprodukt in Form von Granulatkörnern vorliegt.

10. Verfahren zur Herstellung eines Verbundprodukts, wobei das polymerbasierte Material und das organische natürliche Fasermaterial, welches aus einem zellstoffbasiertem Material hergestellt ist, ausgewählt werden und das organische natürliche Fasermaterial mit dem geschmolzenen polymerbasierten Material vermischt wird, um eine Mischung zu bilden, und das Verbundprodukt, welches ein Porenvolumen aufweist, ausgehend von der Mischung derart hergestellt wird, dass das Porenvolumen des Verbundprodukts weniger als 15 % beträgt.

11. Verfahren nach Anspruch 10, **dadurch gekennzeichnet, dass** das Verbundprodukt mittels Granulierung hergestellt wird, um das Verbundprodukt derart herzustellen, dass es in Form von Granulatkörnern vorliegt.

12. Verfahren nach Anspruch 10 oder 11, **dadurch gekennzeichnet, dass** das organische natürliche Fasermaterial ausgehend von einem organischen natürlichen Rohstoff hergestellt wird, indem vor dem Vermischen ein Quetschungsvorgang erfolgt.

13. Endprodukt, **dadurch gekennzeichnet, dass** das Endprodukt ausgehend von dem Verbundprodukt nach einem beliebigen der Ansprüche 1 bis 9 oder von dem Verbundprodukt hergestellt wird, welches mittels des Verfahrens nach einem beliebigen der Ansprüche 10 bis 12 erhalten wird.

14. Endprodukt nach Anspruch 13, **dadurch gekennzeichnet, dass** das Endprodukt ausgehend von den Granulatkörnern des Verbundprodukts hergestellt wird.

15. Verwendung des Verbundprodukts nach einem beliebigen der Ansprüche 1 bis 9, **dadurch gekennzeichnet, dass** das Verbundprodukt bei der Herstellung eines Endprodukts verwendet wird.

**Revendications**

1. Produit composite comprenant un mélange de matériau organique en fibre naturelle formé à partir d'un matériau à base de pâte chimique mélangé à un matériau à base de polymère fondu, et le produit composite formé à partir du mélange ayant un volume de pores inférieur à 15 %.

2. Produit composite selon la revendication 1, **caractérisé en ce que** le matériau organique en fibre naturelle est formé à partir d'une matière de départ naturelle organique par écrasement avant le mélange.

3. Produit composite selon la revendication 1 ou 2, **caractérisé en ce que** le produit composite comprend 40 à 60 % de matériau organique en fibre naturelle, et le produit composite sec absorbe l'humidité à moins de 1,5 % du poids du produit composite dans un délai de 30 heures (atmosphère à 50 % d'humidité relative et 22 °C).

4. Produit composite selon la revendication 1 ou 2, **caractérisé en ce que** le produit composite comprend 20 à 40 % de matériau organique en fibre naturelle et le produit composite sec absorbe l'humidité à moins de 1,3 % du poids du produit composite dans un délai de 30 heures (atmosphère à 50 % d'humidité relative et 22 °C).

5. Produit composite selon l'une quelconque des revendications 1 à 4, **caractérisé en ce que** le volume des pores du mélange est inférieur à 10 %.

6. Produit composite selon l'une quelconque des revendications 1 à 5, **caractérisé en ce que** le volume des pores est inférieur à 5 %.

7. Produit composite selon l'une quelconque des revendications 1 à 6, **caractérisé en ce que** la masse volumique du produit composite est au moins 85 % de la masse volumique théorique.

**8.** Produit composite selon l'une quelconque des revendications 1 à 7, **caractérisé en ce que** la masse volumique théorique est comprise entre 930 et 1 600 kg/m$^3$.

**9.** Produit composite selon l'une quelconque des revendications 1 à 8, **caractérisé en ce que** le produit composite est sous la forme de granulés.

**10.** Procédé de fabrication d'un produit composite, dans lequel un matériau à base de polymère et un matériau organique en fibre naturelle formé à partir d'un matériau à base de pâte chimique sont sélectionnés, et le matériau organique en fibre naturelle est mélangé avec le matériau à base de polymère fondu pour former un mélange, et le produit composite ayant un volume de pores est formé à partir du mélange de sorte que le volume de pores du produit composite est inférieur à 15 %.

**11.** Procédé selon la revendication 10, **caractérisé en ce que** le produit composite est formé par granulation afin de façonner le produit composite sous la forme de granulés.

**12.** Procédé selon la revendication 10 ou 11, **caractérisé en ce que** le matériau organique en fibre naturelle est formé à partir d'une matière de départ naturelle organique par écrasement avant le mélange.

**13.** Produit final, **caractérisé en ce que** le produit final est formé à partir du produit composite selon l'une quelconque des revendications 1 à 9 ou du produit composite résultant du procédé selon l'une quelconque des revendications 10 à 12.

**14.** Produit final selon la revendication 13, **caractérisé en ce que** le produit final est formé à partir des granulés du produit composite.

**15.** Utilisation du produit composite selon l'une quelconque des revendications 1 à 9, **caractérisée en ce que** le produit composite est utilisé dans la fabrication d'un produit final.

*Fig. 1*

Fig. 2

*Fig. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1997030838 A